# FASCICULE DE BREVET EUROPEEN

(11) **EP 0 493 173 B1**
(45) Date de publication et mention de la délivrance du brevet: **23.05.2001**
(21) Numéro de dépôt: 91403371.7
(22) Date de dépôt: 12.12.1991
(51) Int. Cl.: C01B 25/047

(54) **Procédé de purification du phosphore blanc**
Verfahren zur Reinigung von weissen Phosphor
Method for purification of white phosphorus

(30) Priorité: 21.12.1990 FR 9016165
(43) Date de publication de la demande: 01.07.1992
(73) Titulaire: Atofina, 92800 Puteaux (FR)
(72) Inventeur: Legrand, Jean-Claude, F-69004 Lyon (FR); Bourdauducq, Paul, F-69630 Chaponost (FR); Bulinge, Thierry, F-73220 Epierre (FR)

(56) Documents cités:
- DE-A- 2 135 546
- US-A- 4 664 896

## Description

La présente invention concerne un procédé pour la purification du phosphore blanc.

L'invention concerne également un dispositif pour la mise en oeuvre du présent procédé.

Le phosphore blanc est essentiellement obtenu industriellement par réduction de phosphates par le carbone en présence de silice dans un four électrique.

Le phosphore blanc obtenu par ce procédé électrothermique contient en faible quantité des impuretés dissoutes ou restant à l'état solide de nature organique (hydrocarbures et composés phénoliques) ou minérale (fer, arsenic,...).

Ces impuretés ne sont généralement pas nuisibles pour un bon nombre d'utilisations du phosphore blanc. Cependant, certaines obtentions de dérivés phosphorés, notamment la préparation du P₄S₁₀, nécessitent d'avoir un phosphore blanc de grande pureté et quasi exempt de composés organiques.

En effet, la présence de tels composés entraîne la formation de produits colorés difficilement séparables.

De nombreux brevets (FR 2 057 536, DE 2 035 432) enseignent que l'on peut purifier le phosphore blanc provenant du procédé électrothermique en le traitant par H₂SO₄ dans des conditions de concentration et de températures variables.

Ces façons de procéder présentent un certain nombre d'inconvénients.

D'une part il peut se former des peroxydes avec un risque de réactions violentes et incontrôlables.

D'autre part, malgré de nombreux lavages, il reste une quantité non négligeable de H₂SO₄ (jusqu'à 50 ppm) susceptible d'entraîner des risques de corrosion.

De plus, si ce traitement présente une certaine efficacité pour ce qui concerne l'élimination des matières organiques du phosphore, il ne réduit que faiblement la teneur en matières en suspension dans le phosphore purifié.

Enfin ces procédés génèrent des quantités d'effluents aqueux importantes -plus de 2 tonnes d'acide sulfurique à 5 % pollué par des matières organiques par tonne de phosphore traité- quantités rédhibitoires pour un procédé économique ce qui va à l'encontre de la protection de l'environnement.

Le brevet US 4 664 896 enseigne que le phosphore blanc liquide peut être traité avec du charbon actif.

Dans ce procédé, le gâteau de filtration contenant essentiellement du charbon actif épuisé, du phosphore, des impuretés éliminées du phosphore purifié et l'agent de filtration est délayé avec du phosphore blanc liquide de façon à obtenir une bouillie véhiculable.

Cette bouillie est recyclée au four électrique de production de phosphore.

Cette façon de procéder présente un certain nombre d'inconvénients tels que par exemple le recyclage de la bouillie phosphorée au four électrique. Cette bouillie contient inévitablement de l'eau en quantité non négligeable, amenée par exemple par l'agent de filtration ou le charbon actif épuisé. Cette eau, en présence de phosphore et de carbone, dans les conditions de températures élevées du four électrique, est susceptible de conduire à la formation d'hydrogéne avec un risque d'explosion et de phosphine PH₃. Ce produit toxique est de nature à polluer les effluents gazeux.

De plus, sa formation entraîne une consommation inutile et non négligeable de phosphore.

En outre, l'utilisation de phosphore liquide pour obtenir une bouillie véhiculable rend le procédé peu économique en entraînant notamment un investissement supplémentaire pour le transport en toute sécurité du phosphore blanc liquide ainsi utilisé.

On a maintenant trouvé un procédé de purification de phosphore blanc par le charbon actif, ce procédé consistant à introduire dans une cuve de réaction une suspension aqueuse de charbon actif et du phosphore blanc liquide et à récupérer le phosphore blanc liquide purifié en le séparant du charbon actif épuisé, le dit procédé étant caractérisé en ce qu'il consiste :
a/ à décanter dans une cuve de stockage, préalablement à la séparation du phosphore blanc liquide purifié du charbon actif épuisé, le milieu de purification contenu dans la cuve de réaction, en une phase aqueuse et une phase phosphorée,
b/ à transférer ladite phase phosphorée dans une zone de séparation où le phosphore blanc purifié est séparé du charbon actif épuisé,
c/ à transformer la phase solide de séparation du phosphore blanc purifié du charbon actif épuisé en une suspension aqueuse,
d/ et à réaliser l'élimination de ladite suspension aqueuse dans une zone de calcination.

Selon le procédé de l'invention, le phosphore blanc est maintenu à une température supérieure à son point de fusion, et de préférence à une température comprise entre 55°C et 70°C.

On opère avantageusement sous gaz inerte tel que l'azote, sous une pression relative au moins égale à 1 bar et, de préférence sous une pression relative comprise entre 1,2 bars et 2 bars.

La cuve de réaction peut être chargée successivement avec de l'eau, du phosphore blanc liquide à purifier et du charbon actif avantageusement sous forme de suspension aqueuse, d'une façon telle que le phosphore liquide soit coulé dans la cuve de réaction sous eau. Eventuellement on peut effectuer un appoint en eau phosphorée.

Par eau phosphorée on entend une eau de recyclage ayant déjà eu un contact avec du phosphore blanc liquide.

On agite vigoureusement le milieu de purification.

Le temps de contact entre le phosphore blanc à purifier et le charbon actif est au moins égal à 30 minutes et de préférence compris entre 1 et 3 heures. Ce temps de contact est essentiellement fonction de la teneur en impuretés organiques du phosphore blanc à purifier.

La suspension aqueuse de charbon actif peut être préalablement préparée dans un dispositif séparé.

S'agissant du charbon actif, on peut utiliser des charbons de bois activés ayant une surface spécifique au moins égale à 1000 m²/g et de préférence comprise entre 1 100 et 1 300 m²/g. La suspension aqueuse contient au moins 10 % en poids de charbon actif et de préférence entre 15 % et 20 % en poids.

On utilisera par tonne de phosphore à purifier au moins 1 kg de charbon actif et de préférence une quantité comprise entre 2 kg et 20 kg.

Selon le procédé de l'invention, le transfert de la totalité des phases du milieu de purification dans la cuve de stockage, préalablement remplie d'eau s'effectue par coulée sous la dite eau. Ce transfert peut avantageusement être réalisé sous pression d'azote.

On réalise dans cette cuve de stockage, la décantation des phases du dit milieu de purification. La température à laquelle on réalise la décantation du milieu de purification est au moins égale à 50°C et de préférence comprise entre 60°C et 75°C. La phase dite "phosphorée" décantée est essentiellement constituée de phosphore blanc liquide purifié et de charbon actif épuisé.

La phase aqueuse se mélange avec l'eau contenue dans la cuve de stockage. Cette eau dite "eau phosphorée" peut avantageusement être utilisée pour réaliser la suspension aqueuse de charbon actif ou bien servir d'eau d'appoint au milieu de purification.

Selon le procédé de l'invention, cette cuve de stockage permet d'alimenter en "phase phosphorée décantée" une zone dite zone de séparation dans laquelle on réalise la séparation du phosphore blanc liquide purifié du charbon actif épuisé. Cette séparation peut être réalisée par différents moyens tels que centrifugation, filtration, décantation naturelle.

Selon l'invention, on utilisera de préférence comme mode de séparation, la filtration sur précouche. A cette fin, on choisira comme agent de filtration une terre d'infusoire (ou kieselguhr) ayant une teneur en silice au moins égale à 80 % et, de préférence une teneur comprise entre 85 % et 90 %.

La précouche est généralement mise en place sur le filtre à partir d'une suspension d'agent de filtration dans l'eau éventuellement phosphorée, cette suspension étant préparée dans un dispositif séparé.

On utilisera au moins 500 g d'agent de filtration par tonne de phosphore à purifier et de préférence une quantité comprise entre 1 et 2 kg.

Selon le procédé de l'invention, la "phase phosphorée décantée" est transférée sous forme liquide du bac de stockage sur un filtre, par exemple au moyen d'une pompe.

Le phosphore blanc liquide purifié est acheminé vers une zone de stockage.

Selon le procédé de l'invention, le gâteau de filtration, c'est-à-dire le solide retenu dans le filtre et contenant le charbon actif épuisé, l'agent de filtration et les matières en suspension initialement contenues dans le phosphore à purifier est périodiquement éliminé par tout moyen connu (vibrations, contre-courant de gaz inerte, contre-courant d'eau phosphorée, centrifugation) et préférentiellement par remise en suspension dans de l'eau phosphorée de façon à produire une suspension aqueuse véhiculable. Ceci pouvant être avantageusement réalisé dans la zone de séparation.

La température de l'eau nécessaire pour réaliser cette suspension est généralement au moins égale à 50°C et de préférence comprise entre 60°C et 70°C.

Cette suspension aqueuse, essentiellement constituée d'eau, comprend du phosphore en faible proportion, du charbon actif épuisé, l'agent de filtration et des matières minérales.

Cette suspension aqueuse peut être véhiculée vers une zone de calcination.

Selon le procédé de l'invention cette zone de calcination est constituée par le four de calcination des minerais de phosphates.

Ce procédé s'applique tout particulièrement à la purification du phosphore blanc provenant essentiellement du procédé électrothermique et pouvant contenir jusqu'à 1 % d'impuretés organiques et diverses impuretés minérales telles que fer, arsenic,... .

Ce procédé s'applique tout particulièrement à la purification du phosphore blanc servant à la préparation du P₄S₁₀.

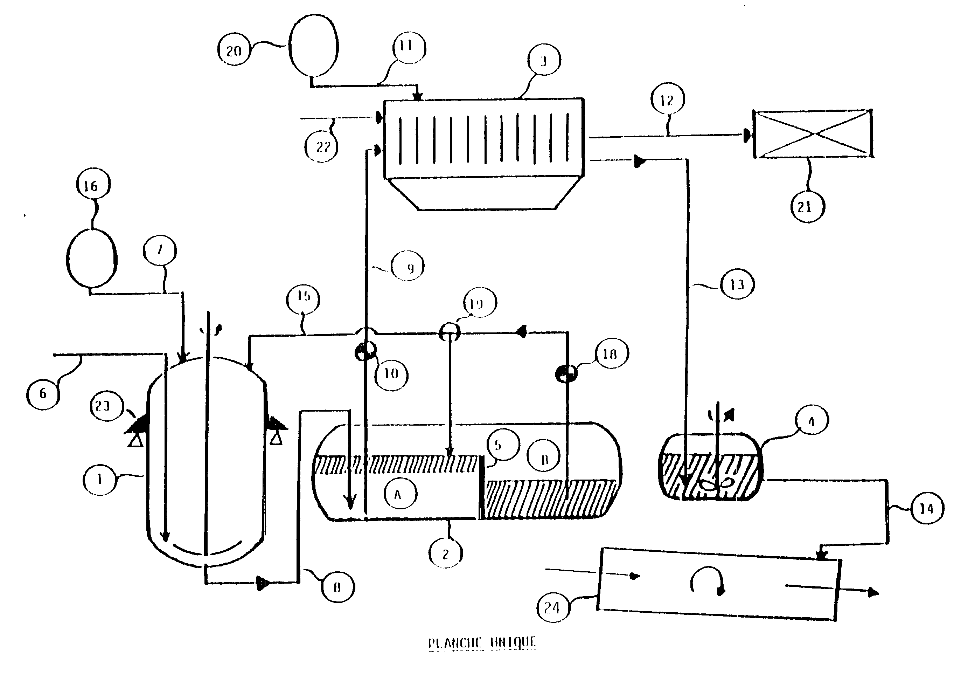

Ce procédé peut être mis en oeuvre au moyen d'un dispositif tel que représenté sur la planche unique.

Ce dispositif est caractérisé en ce qu'il comprend :
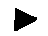 une cuve de réaction (1) généralement cylindrique et sensiblement verticale, munie d'une agitation efficace,
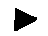 un bac de stockage (2) de forme cylindrique et sensiblement horizontal, comportant deux compartiments (A) et (B) communiquant entre eux et séparés par une cloison sensiblement verticale (5),
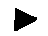 un filtre (3) composé d'une enveloppe cylindrique sensiblement horizontale pourvue de cadres filtrants circulaires,
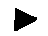 un bac relais disperseur (4) de forme cylindrique, sensiblement vertical muni d'un agitateur,
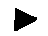 une alimentation (6) permettant d'introduire le phosphore blanc à purifier sous forme liquide dans la partie inférieure de la cuve de réaction (1),
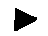 une alimentation (7) permettant d'introduire dans la partie supérieure de la cuve de réaction (1) la suspension aqueuse de charbon actif préparée dans un réacteur agité (16),
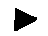 une conduite (8) permettant de transférer le contenu de la cuve de réaction (1) dans la partie inférieure du compartiment (A) du bac de stockage (2),
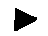 une alimentation (9) permettant de transférer la phase phosphorée décantée dans le filtre (3),
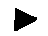 une alimentation (11) permettant d'introduire dans le filtre (3) l'agent de filtration sous forme d'une suspension aqueuse préparée dans un réacteur (20),
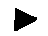 une conduite de sortie (12) véhiculant le phosphore blanc purifié sous forme liquide vers une zone de stockage (21),
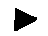 une conduite (13) permettant de transférer le gâteau de filtration remis en suspension dans de l'eau phosphorée vers le bac relais disperseur (4),
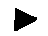 une évacuation (14) de la suspension aqueuse.

Le phosphore blanc brut à purifier provient de bacs stockage où il est maintenu liquide. Selon le procédé il est introduit de préférence à la partie inférieure de la cuve (1) préalablement remplie d'eau.

Avantageusement, on peut introduire par la conduite (15) une quantité d'eau phosphorée provenant du compartiment B du bac de stockage (2).

La cuve de réaction (1), le bac de stockage (2) le filtre (3) et le bac relais disperseur (4) peuvent être munis de systèmes de chauffage (non représentés sur la planche unique), constitués par une double enveloppe à l'intérieur de laquelle circule de l'eau maintenue à une température permettant de porter les différents milieux à température généralement au moins égale à 50°C et de préférence à une température comprise entre 60 et 80°C.

La cuve (1) peut avantageusement être munie d'au moins une contre pâle disposée verticalement (non représentée sur la planche unique).

Une pompe (10) permet de transférer la phase phosphorée décantée du compartiment (A) du bac (2) au filtre (3).

Avantageusement le compartiment (A) du bac de stockage (2) représente au moins 50 % du volume total dudit bac de stockage (2) et de préférence compris entre 55 % et 70 %.

La quantité volumique d'eau surnageant la phase phosphorée décantée n'est généralement pas inférieure à 15 % (en volume) du volume total de ce compartiment.

Avantageusement on réalise une surverse de l'eau surnageante du compartiment (A) dans le compartiment (B), et afin de maintenir un recouvrement permanent de la phase phosphorée décantée on peut effectuer une circulation de l'eau du compartiment (B) dans le compartiment (A) au moyen de la conduite (15) et de la pompe (18). Une vanne (19) permet d'effectuer un appoint d'eau phosphorée dans la cuve de réaction (1).

Le phosphore blanc purifié est séparé du charbon actif épuisé dans un filtre (3) muni de cadres filtrants montés verticalement sur un collecteur horizontal qui avantageusement lors de l'opération de nettoyage, c'est-à-dire lors de l'élimination de l'agent de filtration, est mis en rotation. Ce nettoyage est avantageusement effectué sous pression d'eau chaude amenée par la conduite (22) ou par de l'eau phosphorée provenant du compartiment (B) du bac de stockage (2).

Les plateaux sont constitués avantageusement de toiles métalliques en inox.

Le filtre est rempli avec la suspension aqueuse contenant l'agent de filtration, puis on réalise une précouche. L'eau est déplacée ensuite par la phase phosphorée décantée qui est alors filtrée ; le phosphore blanc purifié sous forme liquide est véhiculé ensuite vers une zone de stockage (21) après avoir subi un contrôle de pureté.

Selon l'invention le gâteau de filtration est éliminé des plateaux puis transféré dans le bac relais disperseur (4) préalablement rempli d'eau chaude, où il est maintenu en suspension à l'aide d'une forte agitation.

La suspension aqueuse est véhiculée au four de calcination des minerais de phosphates (24).

Avantageusement, elle est introduite à un endroit proche des brûleurs. Le carbone provenant du charbon actif épuisé est transformé en CO₂ alors que le phosphore est transformé en P₂O₅ qui est susceptible de s'associer à la chaux du minerai.

Un système de pesons (23) situés à la partie supérieure du réacteur (1) peut permettre de connaître de façon continue les quantités de matières introduites.

Les caractéristiques des autres dispositifs utilisés pour la mise en oeuvre du procédé selon l'invention tels que appareils d'instrumentation (manomètres, thermomètres, pressostats, dispositifs électriques, détecteurs de niveaux...) sont connus de l'homme du métier et ne constituent pas en elles-mêmes l'objet de la présente invention.

Le présent procédé conforme à l'invention présente de nombreux avantages.

Il permet d'obtenir un phosphore de haute pureté, quasi exempt de matières organiques -inférieures à 50ppm- d'éléments métalliques tels que fer et de matières en suspension.

Ce procédé permet également d'éviter toutes pertes en phosphore puisqu'il permet la récupération du phosphore susceptible d'être perdu dans les diverses opérations de filtration et de décantation.

Enfin le recyclage de l'agent de filtration sous forme d'une suspension aqueuse au four de calcination permet de détruire tous les effluents liquides ou solides et évite ainsi d'accumuler des effluents plus ou moins toxiques.

L'exemple suivant illustre l'invention.
a/ L'appareillage utilisé est telque représenté sur la planche unique, avec les caractéristiques suivantes :
   - volume de la cuve de réaction (1) : 9 m³
   - volume du bac de stockage (2) : 55 m³
   qui se répartit en 30 m3 pour le compartiment (A) et 25 m3 pour le compartiment (B),
   - volume du bac disperseur (4) : 25 m³
   - surface filtrante du filtre (3) : 32 m³
b/ Conditions opératoires,

Dans la cuve de réaction (1) on introduit :
- 1,5 m³ d'eau que l'on porte à 65°C,
- 10380 Kg de phosphore blanc liquide à 60°C contenant 1000 ppm de matières organiques et 4000 ppm de matières en suspension,
- une suspension aqueuse de 50 Kg d'ACTICARBONE® 2S, de surface spécifique BET égale à 1150 m²/g dans 300 1 d'eau à 65°C.

Cette suspension est préalablement préparée dans une cuve agitée (16).

Le phosphore blanc liquide est coulé sous eau.

On agite vigoureusement le milieu pendant 2 heures tout en maintenant la température à 65°C.

Ensuite on transfère la totalité du contenu de la cuve de réaction (1) dans le compartiment (A) du bac de stockage (2) qui a été préalablement rempli avec 5 m³ d'eau à 65°C. Ce transfert a été réalisé par une surpression d'azote et la totalité du contenu de la cuve de réaction est coulé sous l'eau.

Lorsque la décantation est totale, ce que l'on peut vérifier par des indicateurs de niveau, la phase phosphorée décantée est transférée dans le filtre (3) dans lequel la précouche a été préalablement mise en place.

A cette fin on rempli le filtre (3) avec une suspension aqueuse contenant 10 Kg de Clarcel préparée dans une cuve (20). Le précouche est réalisée en faisant circuler la suspension aqueuse de Clarcel à l'intérieur du filtre jusqu'à épuisement (constitution de la précouche par le principe du tourne en rond).

Ensuite, la phase phosphorée décantée déplace l'eau de la suspension aqueuse épuisée et est filtrée.

Le phosphore blanc liquide purifié est transféré dans une zone de stockage (21).

On récupère ainsi 10 000 Kg de phosphore blanc présentant les caractéristiques suivantes :
- matières organiques : 40 ppm
- matières en suspension : quasiment inexistantes.

Le gâteau de filtration est remis en suspension dans le filtre (3) par injection d'eau phosphorée sur les plateaux.

On obtient une suspension aqueuse véhiculable qui est transférée dans le bac relais (4) préalablement rempli d'eau à 65°C fortement agitée.

La suspension aqueuse comprenant environ 50 % en poids de phosphore blanc, 25 % d'eau et 25 % de matières diverses essentiellement constituées par le charbon actif épuisé, l'agent de filtration, les matières en suspension de départ est introduit dans un four de calcination des minerais de phosphates de préférence dans la zone de flamme -brûleur- qui est à une température voisine de 1 200°C.

## Revendications

1. Procédé de purification de phosphore blanc par le charbon actif, ce procédé consistant à introduire dans une cuve de réaction une suspension aqueuse de charbon actif et du phosphore blanc liquide et à récupérer le phosphore blanc liquide en le séparant du charbon actif épuisé, le dit procédé étant caractérisé en ce qu'il consiste :
a/ à décanter dans une cuve de stockage, préalablement à la séparation du phosphore blanc liquide purifié du charbon actif épuisé, le milieu de purification contenu dans la cuve de réaction, en une phase aqueuse et une phase phosphorée,
b/ à transférer ladite phase phosphorée dans une zone de séparation où le phosphore blanc purifié est séparé du charbon actif épuisé,
c/ à transformer la phase solide de séparation du phosphore blanc purifié du charbon actif épuisé en une suspension aqueuse,
d/ et à réaliser l'élimination de ladite suspension aqueuse dans une zone de calcination.

2. Procédé selon la revendication 1, caractérisé en ce que le phosphore blanc est à une température supérieure à son point de fusion, et de préférence à une température comprise entre 55°C et 70°C.

3. Procédé selon la revendication 1, caractérisé en ce qu'on réalise dans la cuve de stockage la décantation du milieu de purification à une température au moins égale à 50°C et de préférence comprise entre 60°C et 75°C.

4. Procédé selon la revendication 1, caractérisé en ce que la phase solide de séparation du phosphore blanc purifié du charbon actif épuisé est transformée en une suspension aqueuse dans la zone de séparation.

5. Procédé selon la revendication 1, caractérisé en ce que la zone de calcination est le four de calcination de minerais de phosphates.

6. Dispositif permettant la mise en oeuvre du procédé selon l'une quelconque des revendications 1 à 5, ledit dispositif étant caractérisé en ce qu'il comprend :
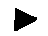 une cuve de réaction (1) généralement cylindrique et sensiblement verticale,
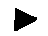 un bac de stockage (2) de forme cylindrique et sensiblement horizontal, comportant deux compartiments (A) et (B) communiquant entre eux et séparés par une cloison sensiblement verticale (5),
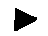 un filtre (3),
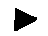 un bac relais disperseur (4) de forme cylindrique, sensiblement vertical muni d'un agitateur,
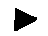 une alimentation (6) permettant d'introduire le phosphore blanc à purifier sous forme liquide dans la partie inférieure de la cuve de réaction (1),
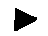 une alimentation (7) permettant d'introduire dans la partie supérieure de la cuve de réaction (1) la suspension aqueuse de charbon actif,
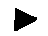 une conduite (8) permettant de transférer le contenu de la cuve de réaction (1) dans la partie inférieure du compartiment (A) du bac de stockage (2),
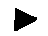 une alimentation (9) permettant de transférer la phase phosphorée décantée dans le filtre (3),
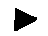 une alimentation (11) permettant d'introduire dans le filtre (3) l'agent de filtration sous forme d'une suspension aqueuse,
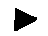 une conduite de sortie (12) véhiculant le phosphore blanc purifié sous forme liquide vers une zone de stockage (21),
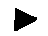 une conduite (13) permettant de transférer le gâteau de filtration remis en suspension vers le bac relais disperseur (4),
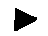 une évacuation (14) de la suspension aqueuse.

7. Dispositif selon la revendication 6, caractérisé en ce que le compartiment (A) du bac de stockage (2) représente au moins 50 % du volume total dudit bac de stockage (2) et de préférence compris entre 55 % et 70 %.

8. Dispositif selon la revendication 6, caractérisé en ce que la cuve de réaction (1), le bac de stockage (2), le filtre (3) et le bac relais disperseur (4) sont munis de systèmes de chauffage.

## Patentansprüche

1. Verfahren zur Reinigung von weißem Phosphor mit Aktivkohle, das darin besteht, eine wäßrige Aktivkohlesuspension und flüssigen weißen Phosphor in ein Reaktionsgefäß zu geben und den flüssigen weißen Phosphor wiederzugewinnen, indem man ihn von der erschöpften Aktivkohle trennt, wobei das genannte Verfahren dadurch gekennzeichnet ist, daß es darin besteht:
a) vor der Trennung des gereinigten flüssigen weißen Phosphors von der erschöpften Aktivkohle, das im Reaktionsgefäß enthaltene Reinigungsmilieu in eine wäßrige Phase und eine phosphorhaltige Phase zu dekantieren,
b) die genannte phosphorhaltige Phase in eine Trennzone zu überführen, wo der gereinigte weiße Phosphor von der erschöpften Aktivkohle getrennt wird,
c) die feste Phase aus der Trennung des gereinigten weißen Phosphors von der erschöpften Aktivkohle in eine wäßrige Suspension umzuwandeln,
d) und das Entfernen der genannten wäßrigen Suspension in einem Calcinierungsbereich durchzuführen.

2. Verfahren nach Anspruch 1, dadurch gekennzeichnet, daß der weiße Phosphor bei einer Temperatur über seinem Schmelzpunkt und vorzugsweise bei einer Temperatur zwischen 55 °C und 70 °C liegt.

3. Verfahren nach Anspruch 1, dadurch gekennzeichnet, daß man die Dekantierung des Reinigungsmilieus im Vorratsbehälter bei einer Temperatur von mindestens gleich 50 °C und vorzugsweise zwischen 60 °C und 75 °C durchführt.

4. Verfahren nach Anspruch 1, dadurch gekennzeichnet, daß die feste Phase aus der Trennung des gereinigten weißen Phosphors von der erschöpften Aktivkohle in der Trennzone in eine wäßrige Suspension umgewandelt wird.

5. Verfahren nach Anspruch 1, dadurch gekennzeichnet, daß der Calcinierungsbereich der Ofen zur Calcinierung von Phosphaterzen ist.

6. Vorrichtung zum Durchführen des Verfahrens nach irgendeinem der Ansprüche 1 bis 5, wobei die genannte Vorrichtung dadurch gekennzeichnet ist, daß sie enthält:
• ein im allgemeinen zylindrisches und im wesentlichen vertikales Reaktionsgefäß (1),
• einen zylindrischen und im wesentlichen horizontalen Vorratsbehälter (2) mit zwei Räumen (A) und (B), die miteinander verbunden und durch eine im wesentlichen vertikale Trennwand (5) unterteilt sind,
• einen Filter (3),
• einen zylindrischen und im wesentlichen vertikalen Behälter einer Dispergiermaschine (4), der mit einem Rührwerk versehen ist,
• eine Zufuhr (6), die es erlaubt, den zu reinigenden weißen Phosphor in flüssiger Form in den Teil unterhalb des Reaktionsgefäßes (1) zu geben,
• eine Zufuhr (7), die es erlaubt, die wäßrige Aktivkohlesuspension in den Teil über dem Reaktionsgefäß (1) zu geben,
• eine Leitung (8), die es erlaubt, den Inhalt des Reaktionsgefäßes (1) in den unteren Teil des Raumes (A) des Vorratsbehälters (2) zu leiten,
• eine Zufuhr (9), die es erlaubt, die dekantierte phosphorhaltige Phase in den Filter (3) zu leiten,
• eine Zufuhr (11), die es erlaubt, das Filtriermittel in Form einer wäßrigen Suspension in den Filter (3) zu geben,
• eine Austrittsleitung (12), die den gereinigten weißen Phosphor in flüssiger Form in einen Speicherbereich (21) transportiert,
• eine Leitung (13), die es erlaubt, den wieder in Suspension umgewandelten Filterkuchen zum Behälter der Dispergiermaschine (4) zu leiten,
• einen Ablauf (14) für die wäßrige Suspension.

7. Vorrichtung nach Anspruch 6, dadurch gekennzeichnet, daß der Raum (A) des Vorratsbehälters (2) mindestens 50 % des gesamten Volumens des genannten Vorratsbehälters (2) und vorzugsweise zwischen 55 % und 70 % davon beträgt.

8. Vorrichtung nach Anspruch 6, dadurch gekennzeichnet, daß das Reaktionsgefäß (1), der Vorratsbehälter (2), der Filter (3) und der Behälter der Dispergiermaschine (4) mit einem Heizsystem versehen sind.

## Claims

1. Process for the purification of white phosphorus by active charcoal, this process comprising the introduction of an aqueous suspension of active charcoal and liquid white phosphorus into a reaction vessel and the recovery of the liquid white phosphorus by separating it from the spent active charcoal, the said process being characterized in that it comprises:
a/ phase separation of the purification mixture contained in the reaction vessel into an aqueous phase and a phosphorus-containing phase in a storage vessel, before separating the purified liquid white phosphorus from the spent active charcoal,
b/ transferring the said phosphorus-containing phase into a separation zone where the purified white phosphorus is separated from the spent active charcoal,
c/ converting the solid phase from the separation of the purified white phosphorus from the spent active charcoal into an aqueous suspension,
d/ and removing the said aqueous suspension into a calcination zone.

2. Process according to Claim 1, characterized in that the white phosphorus is at a temperature higher than its melting point and preferably at a temperature between 55°C and 70°C.

3. Process according to Claim 1, characterized in that the phase separation of the purification mixture is carried out in the storage vessel at a temperature of at least 50°C and preferably of between 60°C and 75°C.

4. Process according to Claim 1, characterized in that the solid phase from the separation of the purified white phosphorus from the spent active charcoal is converted into an aqueous suspension in the separation zone.

5. Process according to Claim 1, characterized in that the calcination zone is the calcination furnace for phosphate minerals.

6. Apparatus enabling implementation of the process according to any one of Claims 1 to 5, the said apparatus being characterized in that it comprises:
- a reaction vessel (1), which is generally cylindrical and substantially vertical,
- a storage tank (2) which is of cylindrical shape and substantially horizontal and comprises two compartments (A) and (B) communicating with one another and separated by a substantially vertical partition (5),
- a filter (3),
- a dispersing relay tank (4) of cylindrical shape, which is substantially vertical and provided with a stirrer,
- a feed (6) enabling the white phosphorus to be purified to be introduced in liquid form into the lower part of the reaction vessel (1),
- a feed (7) enabling the aqueous suspension of active charcoal to be introduced into the upper part of the reaction vessel (1),
- a line (8) enabling the contents of the reaction vessel (1) to be transferred into the lower part of compartment (A) of the storage tank (2),
- a feed (9) enabling the settled phosphorus-containing phase to be transferred into the filter (3),
- a feed (11) enabling the filter agent, in the form of an aqueous suspension, to be introduced into the filter (3),
- a discharge line (12) transporting the purified white phosphorus in liquid form towards a storage zone (21),
- a line (13) enabling the resuspended filter cake to be transferred towards the dispersing relay tank (4), and
- a discharge (14) for the aqueous suspension.

7. Apparatus according to Claim 6, characterized in that the compartment (A) of the storage tank (2) represents at least 50% of the total volume of the said storage tank (2) and preferably between 55% and 70%.

8. Apparatus according to Claim 6, characterized in that the reaction vessel (1), the storage tank (2), the filter (3) and the dispersing relay tank (4) are provided with heating systems.
